(19) **Europäisches Patentamt / European Patent Office / Office européen des brevets**

(11) **EP 3 868 573 B1**

(12) **EUROPEAN PATENT SPECIFICATION**

(45) Date of publication and mention
of the grant of the patent:
**03.04.2024   Bulletin 2024/14**

(21) Application number: **21155981.0**

(22) Date of filing: **09.02.2021**

(51) International Patent Classification (IPC):
**B60C 9/00** *(2006.01)*          **B60C 9/28** *(2006.01)*
**B60C 9/20** *(2006.01)*

(52) Cooperative Patent Classification (CPC):
**B60C 9/0057; B60C 9/0064; B60C 9/28;**
B60C 2009/2064; B60C 2009/2067;
B60C 2009/2077; B60C 2009/2083

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.02.2020   JP 2020025492**
**15.10.2020   JP 2020174103**

(43) Date of publication of application:
**25.08.2021   Bulletin 2021/34**

(73) Proprietor: **Sumitomo Rubber Industries, Ltd.
Kobe-shi, Hyogo-ken 651-0072 (JP)**

(72) Inventors:
• **YAMAGUCHI, Eiji
Kobe-shi, Hyogo 651-0072 (JP)**
• **NAKAJIMA, Hiroki
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 0 543 640        EP-A1- 3 995 322
JP-A- 2001 080 313    JP-A- 2004 216 977**

**Description**

BACKGROUND OF THE INVENTION

Field of the Invention

The present invention relates to a pneumatic tire.

Description of the Background Art

Japanese Laid-Open Patent Publication No. 2001-80313 discloses a pneumatic tire including a belt layer in a tread portion. The belt layer is configured by embedding, in rubber, a belt cord which is a single steel cord having a flattened cross-sectional shape. According to Japanese Laid-Open Patent Publication No. 2001-80313, the belt cord is helically corrugated, which improves ride comfort.

SUMMARY OF THE INVENTION

In recent years, pneumatic tires have been strongly required to improve fuel efficiency. There is room for improvement in the fuel efficiency of the pneumatic tire disclosed in Japanese Laid-Open Patent Publication No. 2001-80313.

A pneumatic tire in accordance with the preamble of claim 1 is known from JP 2001 080313 A and EP 3 995 322 A1 (document according to Article 54(3) EPC). Related tires are known from JP 2004 216977 A and EP 0 543 640 A1.

The present invention has been made in view of the aforementioned circumstances, and a main object of the present invention is to provide a pneumatic tire that can improve fuel efficiency while maintaining ride comfort.

The object is solved by a pneumatic tire having the features of claim 1. Sub-claims are directed to preferred embodiments. The present invention is directed to a pneumatic tire including a tread portion. In the tire, a belt layer including at least one belt ply is embedded in the tread portion. The belt ply includes a flattened belt cord formed of a single cord, and a topping rubber covering the belt cord. The minor axis of the belt cord extends in the thickness direction of the belt ply. In the belt cord, a major axis/a minor axis is 1.05 to 1.50, and a length of the major axis is 0.30 to 0.50 mm. The topping rubber has a complex elastic modulus of 14.0 to 20.0 MPa.

In the pneumatic tire of the present invention, the belt cord is preferably corrugated in each of a major axis direction and a minor axis direction, each corrugation pitch is preferably 3.0 to 10.0 mm, and a corrugation height is preferably 0.05 to 0.15 mm.

In the pneumatic tire of the present invention, the topping rubber preferably has a loss tangent of 0.04 to 0.16.

In the pneumatic tire of the present invention, the topping rubber preferably has a loss tangent of 0.04 to 0.11.

In the pneumatic tire of the present invention, the topping rubber preferably has a loss tangent of 0.04 to 0.08.

In the pneumatic tire of the present invention, a value obtained by dividing the loss tangent of the topping rubber by the complex elastic modulus (MPa) of the topping rubber is preferably 0.002 to 0.010 (MPa$^{-1}$).

In the pneumatic tire of the present invention, the belt ply includes a first belt ply, and a second belt ply adjacent to the first belt ply in a tire radial direction, and a cord-to-cord distance in the tire radial direction between the belt cord of the first belt ply and the belt cord of the second belt ply is preferably 0.10 to 0.45 mm.

In the pneumatic tire of the present invention, the belt cord is preferably a steel cord.

In the pneumatic tire of the present invention, the belt cord is preferably inclined at an angle of 15 to 45 degrees with respect to a tire circumferential direction.

In the pneumatic tire of the present invention, the number of the belt cords in the belt ply is preferably 32 to 40 per 50 mm in a width direction.

In the pneumatic tire of the present invention, the major axis of the belt cord preferably extends in a width direction of the belt ply.

In the pneumatic tire of the present invention, the belt ply preferably includes a first belt ply, and a second belt ply adjacent to the first belt ply in the tire radial direction, a belt-reinforcing layer including a reinforcement cord is preferably located outward of the belt ply in the tire radial direction, and the following relationships are preferably satisfied,

$$0.175 \leq (G1+G2)/2 \leq 0.425 \qquad (1)$$

$$0.27 \leq \{(G1+G2)/2\}/\{(G1+G2)/2+B\} \leq 0.68 \qquad (2)$$

where G1 (mm) represents an average cord-to-cord distance between the first belt ply and the second belt ply, G2 (mm) represents an average cord-to-cord distance between the second belt ply and the belt-reinforcing layer, and B (mm) represents a length of the minor axis of the belt cord of the second belt ply.

In the pneumatic tire of the present invention, a width of the first belt ply in a tire axial direction is preferably 70 to 100% of a tread width.

In the pneumatic tire of the present invention, a width of the second belt ply in the tire axial direction is preferably 65 to 90% of the tread width.

The pneumatic tire of the present invention having the above-described configuration can improve fuel efficiency while maintaining ride comfort.

BRIEF DESCRIPTION OF THE DRAWINGS

FIG. 1 is a cross-sectional view of a pneumatic tire according to the present invention;
FIG. 2 is an enlarged view of a belt layer shown in FIG. 1;
FIG. 3(a) is a plan view of a belt cord;
FIG. 3(b) is a side view of the belt cord;
FIG. 4(a) is a cross-sectional view of a tire according to another embodiment; and
FIG. 4(b) is an enlarged view of a tread portion shown in FIG. 4(a).

DESCRIPTION OF THE PREFERRED EMBODIMENTS

An embodiment of the present invention will be described below with reference to the drawings.

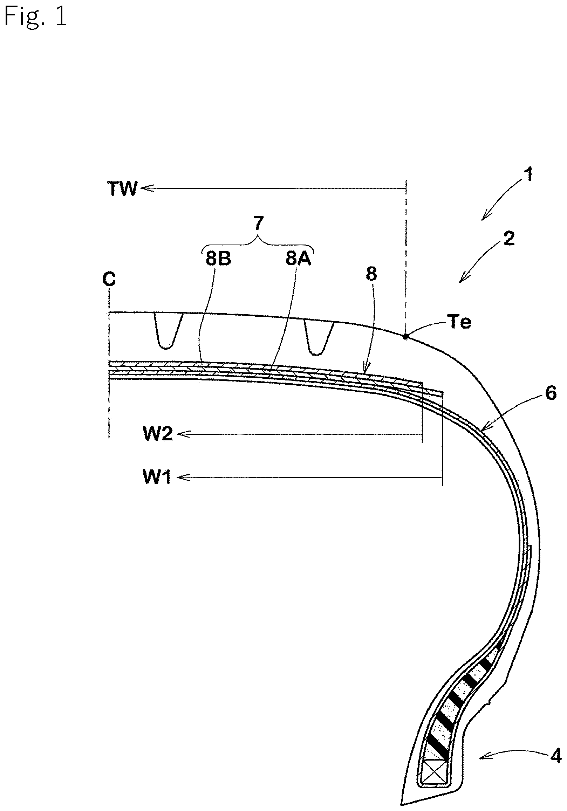

FIG. 1 is a tire meridian cross-sectional view of a pneumatic tire (hereinafter, may be simply referred to as "tire") 1 according to the present embodiment of the invention, showing a right half including a tire rotation axis (not shown) in a normal state. FIG. 1 shows the tire 1 for a passenger car, for example. However, the present invention is also applicable to the tire 1 such as a motorcycle tire and a heavy duty tire.

The "normal state" represents a state in which the tire 1 is mounted on a normal rim (not shown) and is inflated with air to a normal internal pressure, and no load is applied to the tire 1. In the description herein, unless otherwise specified, dimensions of components of the tire 1 are represented as values measured in the normal state.

The "normal rim" represents a rim that is defined by a standard, in a standard system including the standard with which the tire 1 complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire 1 complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

The tire 1 of the present embodiment of the invention includes a belt layer 7 embedded in a tread portion 2. The belt layer 7 includes at least one belt ply 8. The tire 1 also includes a carcass 6 having a known structure. The carcass 6 is, for example, located inward of the belt layer 7 in the tire radial direction, and is extended on and between bead portions 4 on both sides.

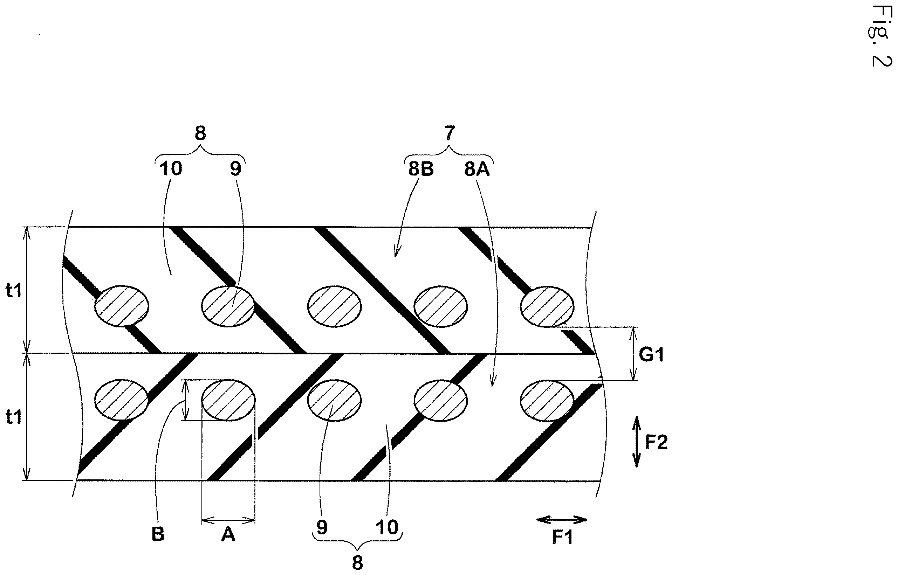

FIG. 2 is an enlarged view of the belt ply 8. As shown in FIG. 2, the belt ply 8 includes a flattened belt cord 9 formed of a single cord, and a topping rubber 10 covering the belt cord 9. The flattened belt cord 9 formed of a single cord has a high compression stiffness, and, therefore, inhibits significant deformation of the belt ply 8, leading to improvement in fuel efficiency. The belt cord 9, which has such a structure, has good adhesiveness to the topping rubber 10 and is thereby inhibited from rusting, and thus has excellent durability. In the present embodiment of the invention, the belt cord 9 has an elliptical transverse cross-section. The transverse cross-sectional shape of the belt cord 9 is not limited to an elliptical shape, and may be, for example, a polygonal shape.

The major axis/minor axis (A/B) that is a ratio of the major axis A to the minor axis B of the belt cord 9 is 1.05 to 1.50. Since the major axis/minor axis (A/B) is not less than 1.05, the vibration damping properties are improved, and, therefore, the ride comfort is maintained. Since the major axis/minor axis is not greater than 1.50, the strength of the belt cord 9 is maintained high, and the deformation of the belt ply 8 is inhibited. In addition, a breakage due to a crack or the like is inhibited, thereby improving durability.

The length of the major axis A of the belt cord 9 is 0.30 to 0.50 mm. Since the length of the major axis A is not less than 0.30 mm, the strength of the belt cord 9 is maintained high. Since the length of the major axis A is not greater than 0.50 mm, the ride comfort is maintained high.

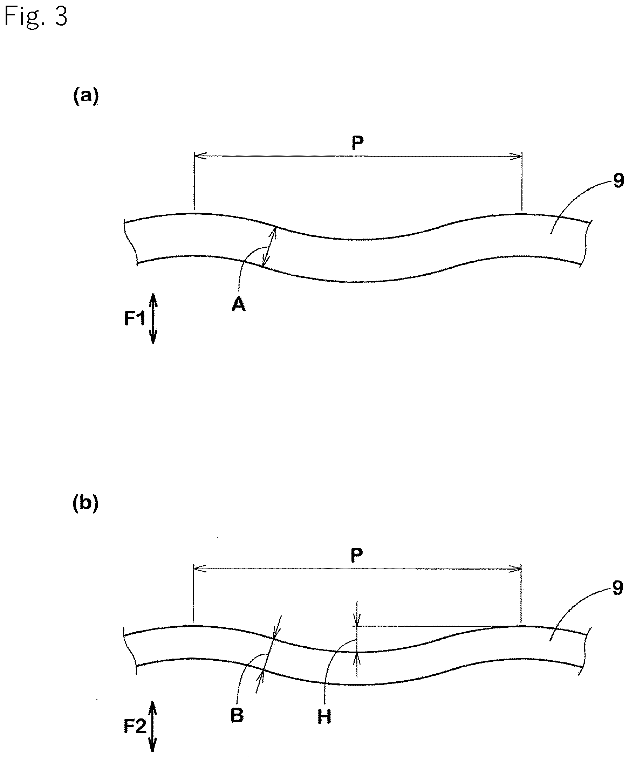

FIG. 3(a) is a plan view of the belt cord 9 as viewed from the outer side in the tire radial direction. FIG. 3(b) is a side view of the belt cord 9 as viewed from a side of the tire. As shown in FIGS. 3(a) and 3(b), in the present embodiment of the invention, the belt cord 9 is corrugated in each of a major axis direction F1 and a minor axis direction F2. In the present embodiment of the invention, the belt cord 9 is helically corrugated. Although the belt cord 9 may not necessarily be corrugated, the belt cord 9 is preferably corrugated in the major axis direction or the minor axis direction, and more preferably helically corrugated in both the major axis direction and the minor axis direction, from the viewpoint of vibration damping properties during rolling and strength.

In the embodiment of the invention shown in FIGS. 3(a) and 3(b), each corrugation pitch P is 3.0 to 10.0 mm. Since the corrugation pitch P is not less than 3.0 mm, the processing degree of corrugation is low, and, therefore, the strength of the belt cord 9 can be maintained high. Since the corrugation pitch P is not greater than 10.0 mm, vibration damping properties can be exhibited. In the description herein, the corrugation pitch P refers to the length of one pitch in the longitudinal direction of the belt cord 9. The lengths (dimensions) of the corrugation pitches P are preferably uniform but may be varied within the above-described range of the corrugation pitch P.

The belt cord 9 also has a corrugation height H of 0.05 to 0.15 mm. Since the corrugation height H is not less than 0.05 mm, the vibration damping properties are maintained. Since the corrugation height H is not greater than 0.15 mm, the strength of the belt cord 9 is maintained high. In the description herein, the corrugation height H refers to a shift distance of the belt cord 9 in the thickness direction of the belt ply 8. The corrugation heights H are preferably uniform but may be varied within the above-described range of the corrugation height H.

The topping rubber 10 has a complex elastic modulus E* of 14.0 to 20.0 MPa. Since the complex elastic modulus E* of the topping rubber 10 is not less than 14.0 MPa, the deformation of the belt ply 8 is inhibited, leading to significant improvement in fuel efficiency. Since the complex elastic modulus E* of the topping rubber 10 is not greater than 20.0 MPa, the vibration damping properties of the tire 1 are inhibited from being degraded. Thus, in the present embodiment of the invention, the belt cord 9 and the topping rubber 10 of the belt layer 7 which is significantly deformed due to rolling of the tire 1 can be specified such that fuel efficiency can be improved while ride comfort is maintained. In addition, the belt cord 9 and the topping rubber 10 having such structures improve durability of the tire 1. The complex elastic modulus E* of the topping rubber 10 is preferably not less than 16.0 MPa, and is preferably not greater than 18.0 MPa.

In the description herein, the complex elastic modulus and a loss tangent described below are measured using a viscoelasticity spectrometer in compliance with JIS K6394 "Rubber, vulcanized or thermoplastic - Determination of dynamic properties - General guidance" under the following conditions.

Initial strain: 10%
Amplitude: ±1%
Frequency: 10 Hz
Deformation mode: tension
Measurement temperature: 70°C
Viscoelasticity spectrometer: Iwamoto Seisakusho

As shown in FIG. 2, the belt ply 8 includes a first belt ply 8A and a second belt ply 8B adjacent to the first belt ply 8A in the tire radial direction. The second belt ply 8B is, for example, located outward of the first belt ply 8A in the tire radial direction.

A width W1 of the first belt ply 8A in the tire axial direction is, for example, 70 to 100% of a tread width TW. A width W2 of the second belt ply 8B in the tire axial direction is, for example, 65 to 90% of the tread width TW.

The tread width TW refers to a distance in the tire axial direction between tread ends Te located on both sides in the tire axial direction in the normal state. The tread end Te refers to an outermost ground contact position in the tire axial direction when the tire 1 in the normal state is under a normal load and is in contact with the flat plane at a camber angle of 0°.

The "normal load" represents a load that is defined by a standard, in a standard system including the standard with which the tire 1 complies, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

An average cord-to-cord distance G1 that is an average distance in the tire radial direction between the belt cord 9 of the first belt ply 8A and the belt cord 9 of the second belt ply 8B is preferably 0.10 to 0.45 mm. Since the average cord-to-cord distance G1 is not less than 0.10 mm, the ride comfort is more effectively maintained. In addition, the belt cord 9 of the first belt ply 8A and the belt cord 9 of the second belt ply 8B are inhibited from being in contact with each other, and, therefore, durability of the tire 1 is improved, and each belt cord 9 is inhibited from being bent. Since the average cord-to-cord distance G1 is not greater than 0.45 mm, increase in mass of the tire 1 and deformation of the topping rubber 10 are inhibited, leading to improvement in fuel efficiency. In this viewpoint, the average cord-to-cord distance G1 is more preferably not less than 0.15 mm and even more preferably not less than 0.20 mm. The average cord-to-cord distance G1 is more preferably not greater than 0.40 mm and even more preferably not greater than 0.35 mm.

In the present embodiment of the invention, the belt cord 9 is formed of a steel cord. The belt cord 9 having such a structure inhibits deformation of the belt ply 8 during running. The belt cord 9 may, for example, be formed of an organic fiber such as aramid. The belt cord 9 having such a structure reduces the mass of the tire 1, leading to further improvement in fuel efficiency. The belt cord 9 of the first belt ply 8A and the belt cord 9 of the second belt ply 8B are formed of the same material and have the same shape.

The belt cord 9 is, for example, inclined at an angle of 15 to 45 degrees with respect to the tire circumferential direction. The belt cord 9 having such a structure has a significant binding effect on the carcass 6.

The belt cord 9 of the first belt ply 8A and the belt cord 9 of the second belt ply 8B are preferably inclined with respect to the tire circumferential direction, in opposite directions, so as to cross each other. However, the present invention is not limited thereto.

The major axis A of the belt cord 9 extends in the width direction of the belt ply 8. In other words, the minor axis B of the belt cord 9 extends in the thickness direction of the belt ply 8. In the belt cord 9 having such a structure, the topping rubber 10 has a reduced thickness t1, and, therefore, the mass of the tire 1 is reduced, leading to improvement in fuel efficiency.

The topping rubber 10 preferably has a loss tangent $\tan\delta$ of 0.04 to 0.16. Since the loss tangent $\tan\delta$ of the topping rubber 10 is not less than 0.04, vibration damping properties can be inhibited from being degraded. Since the loss tangent $\tan\delta$ of the topping rubber 10 is not greater than 0.16, heat generation properties are small, leading to improvement in fuel efficiency. In this viewpoint, the loss tangent $\tan\delta$ of the topping rubber 10 is more preferably not greater than 0.11 and even more preferably not greater than 0.08.

The complex elastic modulus refers to stress with respect to periodic strain. The loss tangent refers to the magnitude of energy consumed when strain is being applied. The inventor of the present invention has found that, according to the value obtained by dividing the loss tangent by the complex elastic modulus, the stiffness and heat generation properties of the topping rubber 10 can be enhanced in a well-balanced manner. The value ($\tan\delta/E^*$) obtained by dividing the loss tangent by the complex elastic modulus of the topping rubber 10 is preferably 0.002 to 0.010 ($MPa^{-1}$). Since the value ($\tan\delta/E^*$) is not less than 0.002 ($MPa^{-1}$), ride comfort is inhibited from being degraded, and steering stability is improved. Since the value ($\tan\delta/E^*$) is not greater than 0.010 ($MPa^{-1}$), fuel efficiency can be improved. The value ($\tan\delta/E^*$) is preferably not less than 0.004 ($MPa^{-1}$), and is preferably not greater than 0.009 ($MPa^{-1}$).

The topping rubber 10 having such a structure preferably contains, in addition to a known rubber material, a phenolic resin, a silica filler, or the like in order to improve the breaking characteristics of the rubber and improve the breaking strength and elongation of the rubber, so that, for example, durability is improved.

The number of the belt cords 9 (ends) per 50 mm in the width direction of the belt ply 8 is preferably 32 to 40. Since the number of ends is not less than 32, the strength is ensured, and deformation of the tire 1 due to rolling is inhibited, leading to improvement in fuel efficiency. Since the number of ends is not greater than 40, the ride comfort can be maintained higher. In addition, excessive increase in the mass of the tire 1 can be inhibited.

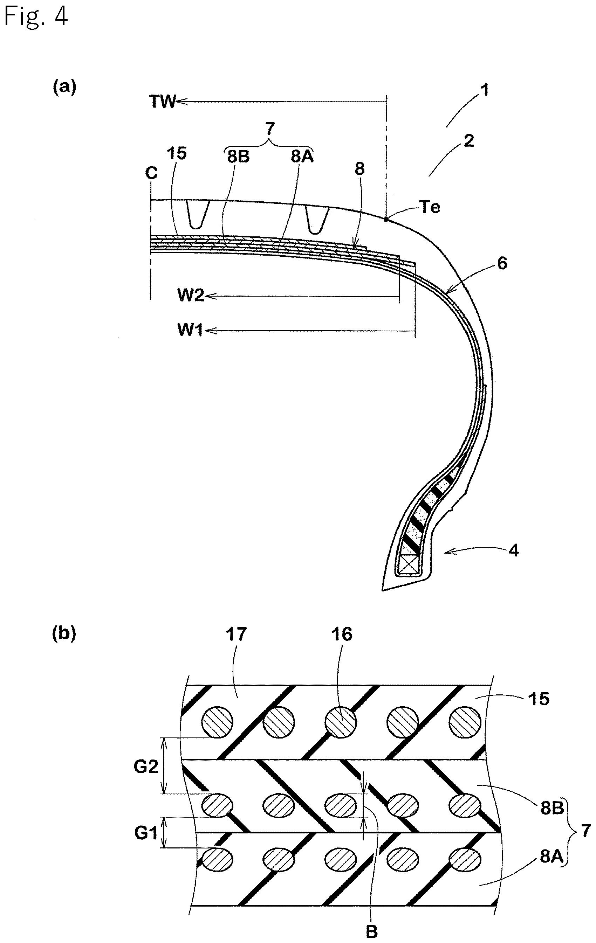

FIG. 4(a) is a tire meridian cross-sectional view of a tire 1 according to another embodiment of the invention. FIG. 4(b) is an enlarged view of a tread portion 2 in FIG. 4(a). As shown in FIG. 4, in the present embodiment of the invention, a belt-reinforcing layer 15 including a reinforcement cord 16 is located outward of the belt layer 7 in the tire radial direction. The belt-reinforcing layer 15 enhances the holding performance of the belt plies 8A and 8B, leading to improvement in the tire strength and durability. The belt-reinforcing layer 15 includes the reinforcement cord 16, and a reinforcement rubber 17 covering the reinforcement cord 16.

The rubber composition of the reinforcement rubber 17 may, for example, be the same as or different from that of the topping rubber 10. In the case where the rubber composition of the reinforcement rubber 17 is different from that of the topping rubber 10, a complex elastic modulus $E^*2$ of the reinforcement rubber 17 is preferably less than the complex elastic modulus $E^*1$ of the topping rubber 10. It is considered that, in a case where the reinforcement rubber 17 is softer than the topping rubber 10, vibration from the road surface can be absorbed in the reinforcement rubber 17, and. therefore, vibration can be inhibited from being transmitted to the belt ply 8 from the road surface.

The difference between the complex elastic modulus $E^*2$ of the reinforcement rubber 17 and the complex elastic modulus $E^*1$ of the topping rubber 10 is preferably not less than 5 MPa and more preferably not less than 8 MPa. Although the upper limit is not particularly defined, the difference in the complex elastic modulus is preferably not greater than 18 MPa and more preferably not greater than 15 MPa. If the difference in the complex elastic modulus exceeds 18 MPa, the transmission of force between the belt ply 8 and the belt-reinforcing layer 15 is deteriorated, and steering stability may be reduced.

Examples of the reinforcement cord 16 include, but are not particularly limited to, textile fibers such as polyester fibers, nylon fibers, and aramid fibers, and metals such as steel. One of them may be used alone or two or more of them may be used in combination. A method in which these are used in combination is not particularly limited. For example, filaments may be stranded to form a single cord, or individual fibers may be aligned in the belt-reinforcing layer 15. The reinforcement cord 16 is preferably a hybrid cord obtained by stranding two types of fibers having different stiffnesses in order to enhance road surface following properties, inhibit the outer diameter growth of the tire, and improve fuel efficiency while improving ride comfort.

Examples of the hybrid cord include a hybrid cord of polyester fibers and nylon fibers, a hybrid cord of aramid fibers and polyester fibers, and a hybrid cord of aramid fibers and nylon fibers. The hybrid cord is preferably obtained by stranding aramid fibers and polyester fibers, and more preferably a hybrid cord of nylon fibers and aramid fibers, from the viewpoint of ride comfort and fuel efficiency.

For example, the reinforcement cord 16 is preferably arranged at an angle within the range of ±10° with respect to the tire circumferential direction. Thus, the holding performance in the tire circumferential direction can be enhanced and durability can be improved. The reinforcement cord 16 has, for example, a round transverse cross-section.

In addition, the reinforcement cord 16 is preferably arranged in the tire axial direction at a density of not less than 35 cords/5 cm (ends: 35) and not greater than 55 cords/5 cm. Thus, the holding performance in the tire circumferential direction can be enhanced, and durability can be improved.

In addition, an average cord-to-cord distance G1, an average cord-to-cord distance G2, and the length of a minor axis B (mm) preferably satisfy the following relationships.

$$0.175 \leq (G1+G2)/2 \leq 0.425 \qquad (1)$$

$$0.27 \leq \{(G1+G2)/2\}/\{(G1+G2)/2+B\} \leq 0.68 \qquad (2)$$

As described above, the average cord-to-cord distance G1 refers to an average distance in the tire radial direction between the belt cord 9 of the first belt ply 8A and the belt cord 9 of the second belt ply 8B. The average cord-to-cord distance G2 refers to an average distance in the tire radial direction between the belt cord 9 of the second belt ply 8B and the reinforcement cord 16 of the belt-reinforcing layer 15. The length of the minor axis B refers to a length in a minor axis direction of the belt cord 9 of the second belt ply 8B. The value of (G1+G2)/2 is more preferably not less than 0.20, and is more preferably not greater than 0.30. The value of {(G1+G2)/2}/{(G1+G2)/2+B} is more preferably not less than 0.40, and is more preferably not greater than 0.50.

When the expressions (1) and (2) are satisfied, a rubber gauge in the second belt ply 8B and the axis of the belt cord 9 are optimized, and, therefore, the overall stiffness of the adjacent first belt ply 8A located on the inner side in the tire radial direction, and the belt-reinforcing layer 15 is enhanced. It is considered that this inhibits deformation during rolling, leading to improvement in fuel efficiency.

The average cord-to-cord distances G1 and G2 are measured by extracting, from the tire 1, a region that extends from the tire equator C as the center toward both sides in the tire axial direction and that covers 50% of the tread width TW. The average cord-to-cord distance G2 is preferably not less than 0.10 mm and more preferably not less than 0.20 mm, and is preferably not greater than 0.70 mm and more preferably not greater than 0.60 mm.

Although the preferred embodiments of the present invention have been described above in detail, the present invention is not limited to the illustrated embodiments, and various modifications can be made to implement the present invention within the scope of the appended claims.

[Examples]

Pneumatic tires, for a passenger car, having the size 195/65R15 and the basic structure in FIG. 1 or FIG. 4(a) were each produced as a test tire according to specifications indicated in Tables 1 and 2. Each test tire was tested for ride comfort, fuel efficiency, breakage rate, tire strength, and durability. Specifications common to the test tires, and a test method were as follows.

    The number of belt plies: two
    Angle of belt cords with respect to the tire circumferential direction: 20 degrees (crossing)
    Belt cord: single cord
    Ends of belt cord: 36
    A/B: 1.07 (Tables 1 and 2)
    A: 0.32 mm
    Reinforcement cord: hybrid cord (fiber diameter: 0.57 mm) of 1100 dtex of aramid and 940 dtex of nylon
    The number of reinforcement cords in the tire width direction: 49 cords/5 cm
    Angle of reinforcement cord with respect to the tire circumferential direction: 0 degrees

<Ride Comfort, Fuel Efficiency, Breakage Rate>

The test tires were mounted to all wheels of a passenger car having an engine displacement of 2000 cc under conditions described below. A test driver drove the test vehicle on a circuit track having a dry asphalt road surface. At that time, sensory evaluation was made by the test driver for ride comfort relevant to stiffness feeling. In addition, after the test for ride comfort, the fuel consumption was measured to calculate the fuel efficiency. Furthermore, the test tire was dismantled to check where any breakage of the belt cord occurred. The results for ride comfort are indicated as scores with the score of comparative example 1 being 100. The results for fuel efficiency are indicated as indexes with the index of comparative example 1 being 100. Furthermore, a ratio between the number of broken belt cords and the total number of belt cords of each test tire was calculated as a breakage rate. For ride comfort, tires each having a score of not less than 95 are acceptable. For fuel efficiency, the greater the value is, the better fuel efficiency is. For breakage rate, the less the value is, the better the evaluation is.

Rim: 15×6JJ
Internal pressure: 230 kPa

<Tire Strength>

A plunger test was conducted in compliance with JIS-D4230. At that time, fracture energy was measured. The results are indicated as indexes with the index of comparative example 1 being 100. The greater the value is, the better the evaluation is.

<Durability>

The test tire was mounted on the above-described rim and was caused to run on a drum test machine under the following test conditions. A running distance was measured until the test tire was broken. The results are indicated as indexes with the index of comparative example 1 being 100. The greater the value is, the better the evaluation is. The test results are indicated in Tables 1 to 3. Overall performance in Table 3 is a combined performance of ride comfort, fuel efficiency, tire strength, durability, and breakage rate.

Internal pressure: 230 kPa
Load: 8.15 kN
Speed: 150 km/h

[Table 1]

| | Comparative Example 1 | Comparative Example 2 | Example 1 | Example 2 | Example 3 | Example 4 | Example 5 | Example 6 | Example 7 | Example 8 |
|---|---|---|---|---|---|---|---|---|---|---|
| Figure showing basic structure | FIG. 1 | FIG. 1 | FIG. 1 | FIG. 1 | FIG. 1 | FIG. 1 | FIG. 1 | FIG. 1 | FIG. 1 | FIG. 1 |
| E*1 (MPa) | 12 | 22 | 17 | 14 | 20 | 20 | 20 | 14 | 16 | 17 |
| $\tan\delta$ | 0.07 | 0.07 | 0.07 | 0.07 | 0.07 | 0.02 | 0.04 | 0.14 | 0.14 | 0.16 |
| $\tan\delta/E*1$ (MPa$^{-1}$) | 0.003 | 0.003 | 0.004 | 0.005 | 0.004 | 0.001 | 0.002 | 0.010 | 0.011 | 0.009 |
| G1 (mm) | 0.30 | 0.30 | 0.30 | 0.30 | 0.30 | 0.30 | 0.30 | 0.30 | 0.30 | 0.30 |
| P(mm) | 9.0 | 9.0 | 9.0 | 9.0 | 9.0 | 9.0 | 9.0 | 9.0 | 9.0 | 9.0 |
| H (mm) | 0.10 | 0.10 | 0.10 | 0.10 | 0.10 | 0.10 | 0.10 | 0.10 | 0.10 | 0.10 |
| Ride comfort [Score: The greater the value is, the better the evaluation is] | 100 | 90 | 99 | 100 | 98 | 97 | 98 | 102 | 102 | 102 |
| Fuel efficiency [Index The greater the value is, the better the evaluation is] | 100 | 122 | 120 | 118 | 122 | 124 | 122 | 118 | 118 | 120 |
| Breakage rate [%: The less the value is, the better the evaluation is] | 5 | 0 | 0 | 0 | 0 | 0 | 0 | 0 | 0 | 0 |
| Tire strength [Index The greater the value is, the better the evaluation is] | 100 | 112 | 110 | 110 | 108 | 112 | 112 | 108 | 107 | 108 |
| Durability [Score: The greater the value is, the better the evaluation is] | 100 | 112 | 110 | 110 | 112 | 108 | 108 | 108 | 106 | 108 |

[Table 2]

| | Example 9 | Example 10 | Example 11 | Example 12 | Example 13 | Example 14 | Example 15 | Example 16 | Example 17 |
|---|---|---|---|---|---|---|---|---|---|
| Figure showing basic structure | FIG. 1 | FIG. 1 | FIG. 1 | FIG. 1 | FIG. 1 | FIG. 1 | FIG. 1 | FIG. 1 | FIG. 1 |
| E*1 (MPa) | 17 | 17 | 17 | 17 | 17 | 17 | 17 | 17 | 17 |
| tanδ | 0.17 | 0.07 | 0.07 | 0.07 | 0.07 | 0.07 | 0.07 | 0.07 | 0.07 |
| tanδ/E*1 (MPa⁻¹) | 0.010 | 0.004 | 0.004 | 0.004 | 0.004 | 0.004 | 0.004 | 0.004 | 0.004 |
| G1 (mm) | 0.30 | 0.08 | 0.10 | 0.45 | 0.50 | 0.30 | 0.30 | 0.30 | 0.30 |
| P (mm) | 9.0 | 9.0 | 9.0 | 9.0 | 9.0 | 2.5 | 3.0 | 10.0 | 11.0 |
| H (mm) | 0.10 | 0.10 | 0.10 | 0.10 | 0.10 | 0.03 | 0.05 | 0.15 | 0.20 |
| Ride comfort [Score: The greater the value is, the better the evaluation is] | 102 | 97 | 98 | 102 | 102 | 99 | 99 | 99 | 99 |
| Fuel efficiency [Index The greater the value is, the better the evaluation is] | 118 | 122 | 120 | 120 | 118 | 120 | 120 | 120 | 120 |
| Breakage rate [%: The less the value is, the better the evaluation is] | 0 | 0 | 0 | 0 | 0 | 0 | 0 | 0 | 0 |
| Tire strength [Index The greater the value is, the better the evaluation is] | 108 | 110 | 110 | 110 | 108 | 108 | 110 | 110 | 107 |
| Durability [Score: The greater the value is, the better the evaluation is] | 106 | 112 | 112 | 110 | 110 | 107 | 110 | 110 | 108 |

[Table 3]

| | Comparative Example 3 | Comparative Example 4 | Comparative Example 5 | Comparative Example 6 | Comparative Example 7 | Example 18 | Example 19 | Example 20 | Example 21 | Example 22 | Example 23 | Example 24 |
|---|---|---|---|---|---|---|---|---|---|---|---|---|
| Figure showing basic structure | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) |
| A (mm) | 0.32 | 0.32 | 0.32 | 0.32 | 0.32 | 0.32 | 0.32 | 0.32 | 0.32 | 0.32 | 0.32 | 0.32 |
| B (mm) | 0.30 | 0.30 | 0.32 | 0.32 | 0.30 | 0.30 | 0.30 | 0.30 | 0.30 | 0.30 | 0.30 | 0.30 |
| A/B | 1.07 | 1.07 | 1.00 | 1.00 | 1.07 | 1.07 | 1.07 | 1.07 | 1.07 | 1.07 | 1.07 | 1.07 |
| E*1 (MPa) | 12 | 22 | 22 | 22 | 12 | 17 | 14 | 20 | 17 | 17 | 17 | 17 |
| $\tan\delta$ | 0.07 | 0.07 | 0.07 | 0.07 | 0.07 | 0.07 | 0.07 | 0.04 | 0.16 | 0.16 | 0.07 | 0.07 |
| $\tan\delta$/E*1 (MPa$^{-1}$) | 0.003 | 0.003 | 0.003 | 0.003 | 0.003 | 0.004 | 0.005 | 0.002 | 0.009 | 0.001 | 0.004 | 0.004 |
| G1 (mm) | 0.30 | 0.30 | 0.30 | 0.30 | 0.30 | 0.30 | 0.30 | 0.30 | 0.30 | 0.30 | 0.20 | 0.20 |
| G2 (mm) | 0.60 | 0.60 | 0.60 | 0.30 | 0.60 | 0.60 | 0.60 | 0.60 | 0.60 | 0.30 | 0.20 | 0.20 |
| (G1+G2)/2 | 0.45 | 0.45 | 0.45 | 0.30 | 0.45 | 0.45 | 0.45 | 0.45 | 0.45 | 0.30 | 0.20 | 0.20 |
| {(G1+G2)/2}/{(G1+G2)/2+B} | 0.60 | 0.60 | 0.58 | 0.48 | 0.60 | 0.60 | 0.60 | 0.60 | 0.60 | 0.50 | 0.40 | 0.40 |
| P (mm) | Not corrugated | Not corrugated | Not corrugated | Not corrugated | 9.0 | Not corrugated | Not corrugated | Not corrugated | Not corrugated | Not corrugated | Not corrugated | 9.0 |
| H (mm) | Not corrugated | Not corrugated | Not corrugated | Not corrugated | 0.10 | Not corrugated | Not corrugated | Not corrugated | Not corrugated | Not corrugated | Not corrugated | 0.10 |
| Ride comfort [Score: The greater the value is, the better the evaluation is] | 100 | 92 | 102 | 97 | 105 | 98 | 102 | 99 | 102 | 104 | 102 | 115 |

(continued)

| | Comparative Example 3 | Comparative Example 4 | Comparative Example 5 | Comparative Example 6 | Comparative Example 7 | Example 18 | Example 19 | Example 20 | Example 21 | Example 22 | Example 23 | Example 24 |
|---|---|---|---|---|---|---|---|---|---|---|---|---|
| Figure showing basic structure | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) |
| Fuel efficiency [Index: The greater the value is, the better the evaluation is] | 100 | 118 | 99 | 105 | 98 | 116 | 115 | 127 | 120 | 128 | 135 | 130 |
| Breakage rate [%: The less the value is, the better the evaluation is] | 3 | 0 | 5 | 5 | 0 | 0 | 0 | 0 | 0 | 0 | 0 | 0 |
| Tire strength [Index: The greater the value is, the better the evaluation is] | 100 | 113 | 90 | 88 | 102 | 115 | 115 | 110 | 108 | 112 | 112 | 115 |
| Durability [Score: The greater the value is, the better the evaluation is] | 100 | 110 | 95 | 89 | 103 | 113 | 110 | 108 | 108 | 114 | 116 | 119 |

(continued)

| | Comparative Example 3 | Comparative Example 4 | Comparative Example 5 | Comparative Example 6 | Comparative Example 7 | Example 18 | Example 19 | Example 20 | Example 21 | Example 22 | Example 23 | Example 24 |
|---|---|---|---|---|---|---|---|---|---|---|---|---|
| Figure showing basic structure | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) | FIG. 4(a) |
| Overall performance [The greater the value is, the better the evaluation is] | 397 | 433 | 381 | 374 | 408 | 442 | 442 | 444 | 438 | 458 | 465 | 479 |

The test results indicate that the test tires of the examples improved fuel efficiency while maintaining ride comfort as compared to the test tires of the comparative examples. The test results also indicate that the test tires of the examples had excellent tire strength and durability.

REFERENCE SIGNS LIST

1. pneumatic tire
7. belt layer
8. belt ply
9. belt cord
10. topping rubber
A. a length of the major axis
B. a length of the minor axis

**Claims**

1. A pneumatic tire (1) including a tread portion (2), wherein

   a belt layer (7) including at least one belt ply (8) is embedded in the tread portion (2),
   the belt ply (8) includes a flattened belt cord (9) formed of a single cord, and a topping rubber (10) covering the belt cord (9), and
   a major axis (A)/ minor axis (B) ratio is 1.05 to 1.50, and a length of the major axis (A) is 0.30 to 0.50 mm in the belt cord (9),
   **characterized in that**
   the minor axis (B) of the belt cord (9) extends in the thickness direction of the belt ply (8), and
   the topping rubber (10) has a complex elastic modulus (E*) of 14.0 to 20.0 MPa, when the complex elastic modulus is measured using a viscoelasticity spectrometer in compliance with JIS K6394 "Rubber, vulcanized or thermoplastic - Determination of dynamic properties - General guidance" under the conditions of initial strain being 10%, amplitude being ±1%, frequency being 10 Hz, deformation mode being tension, measurement temperature being70°C, and viscoelasticity spectrometer being Iwamoto Seisakusho.

2. The pneumatic tire (1) according to claim 1, wherein

   the belt cord (9) is corrugated in each of a major axis direction (F1) and a minor axis direction (F2), and
   each corrugation pitch (P) is 3.0 to 10.0 mm, and a corrugation height (H) is 0.05 to 0.15 mm.

3. The pneumatic tire (1) according to claim 1 or 2, wherein the topping rubber (10) has a loss tangent (tanδ) of 0.04 to 0.16, when the loss tangent is measured using a viscoelasticity spectrometer in compliance with JIS K6394 "Rubber, vulcanized or thermoplastic - Determination of dynamic properties - General guidance" under the conditions of initial strain being 10%, amplitude being ±1%, frequency being 10 Hz, deformation mode being tension, measurement temperature being70°C, and viscoelasticity spectrometer being Iwamoto Seisakusho.

4. The pneumatic tire (1) according to claim 1 or 2, wherein the topping rubber (10) has a loss tangent (tan6) of 0.04 to 0.11, when the loss tangent is measured using a viscoelasticity spectrometer in compliance with JIS K6394 "Rubber, vulcanized or thermoplastic - Determination of dynamic properties - General guidance" under the conditions of initial strain being 10%, amplitude being ±1%, frequency being 10 Hz, deformation mode being tension, measurement temperature being70°C, and viscoelasticity spectrometer being Iwamoto Seisakusho.

5. The pneumatic tire (1) according to claim 1 or 2, wherein the topping rubber (10) has a loss tangent (tan6) of 0.04 to 0.08, when the loss tangent is measured using a viscoelasticity spectrometer in compliance with JIS K6394 "Rubber, vulcanized or thermoplastic - Determination of dynamic properties - General guidance" under the conditions of initial strain being 10%, amplitude being ±1%, frequency being 10 Hz, deformation mode being tension, measurement temperature being70°C, and viscoelasticity spectrometer being Iwamoto Seisakusho.

6. The pneumatic tire (1) according to any one of claims 1 to 5, wherein a value obtained by dividing the loss tangent (tanδ) of the topping rubber (10) by the complex elastic modulus (E*) (MPa) of the topping rubber (10) is 0.002 to 0.010 (MPa$^{-1}$), when the loss tangent is measured using a viscoelasticity spectrometer in compliance with JIS K6394 "Rubber, vulcanized or thermoplastic - Determination of dynamic properties - General guidance" under the conditions of initial strain being 10%, amplitude being ±1%, frequency being 10 Hz, deformation mode being tension, measurement temperature being 70°C, and viscoelasticity spectrometer being Iwamoto Seisakusho.

7. The pneumatic tire (1) according to any one of claims 1 to 6, wherein

the belt ply (8) includes a first belt ply (8A), and a second belt ply (8B) adjacent to the first belt ply (8A) in a tire radial direction, and
a cord-to-cord distance (G1) in the tire radial direction between the belt cord (9) of the first belt ply (8A) and the belt cord (9) of the second belt ply (8B) is 0.10 to 0.45 mm.

8. The pneumatic tire (1) according to any one of claims 1 to 7, wherein the belt cord (9) is a steel cord.

9. The pneumatic tire (1) according to any one of claims 1 to 8, wherein the belt cord (9) is inclined at an angle of 15 to 45 degrees with respect to a tire circumferential direction.

10. The pneumatic tire (1) according to any one of claims 1 to 9, wherein the number of the belt cords (9) in the belt ply 8 is 32 to 40 per 50 mm in a width direction.

11. The pneumatic tire (1) according to any one of claims 1 to 10, wherein the major axis (A) of the belt cord (9) extends in a width direction of the belt ply (8).

12. The pneumatic tire (1) according to any one of claims 1 to 11, wherein

The belt ply (8) includes a first belt ply (8A), and a second belt ply (8B) adjacent to the first belt ply (8A) in the tire radial direction,
a belt-reinforcing layer (15) including a reinforcement cord (16) is located outward of the belt ply (8) in the tire radial direction, and
the following relationships are satisfied,

$$0.175 \leq (G1+G2)/2 \leq 0.425 \qquad (1)$$

$$0.27 \leq \{(G1+G2)/2\}/\{(G1+G2)/2+B\} \leq 0.68 \qquad (2)$$

where G1 (mm) represents an average cord-to-cord distance between the first belt ply (8A) and the second belt ply (8B), G2 (mm) represents an average cord-to-cord distance between the second belt ply (8B) and the belt-reinforcing layer (15), and B (mm) represents a length of the minor axis (B) of the belt cord (9) of the second belt ply (8B).

13. The pneumatic tire (1) according to claim 12, wherein a width (W1) of the first belt ply (8A) in a tire axial direction is 70 to 100% of a tread width (TW).

14. The pneumatic tire (1) according to claim 12 or 13, wherein a width (W2) of the second belt ply (8B) in the tire axial direction is 65 to 90% of the tread width (TW).

**Patentansprüche**

1. Luftreifen (1) mit einem Laufflächenabschnitt (2), wobei

eine Gürtelschicht (7), die mindestens eine Gürtellage (8) umfasst, in den Laufflächenabschnitt (2) eingebettet ist, die Gürtellage (8) einen abgeflachten Gürtelkord (9), der aus einem einzigen Kord gebildet ist, und einen Deckgummi (10), der den Gürtelkord (9) bedeckt, umfasst, und
ein Verhältnis von Hauptachse (A)/Nebenachse (B) 1,05 bis 1,50 beträgt und eine Länge der Hauptachse (A) 0,30 bis 0,50 mm in dem Gürtelkord (9) beträgt,
**dadurch gekennzeichnet, dass**
die Nebenachse (B) des Gürtelkords (9) sich in der Dickenrichtung der Gürtellage (8) erstreckt, und
der Deckgummi (10) einen komplexen Elastizitätsmodul (E*) von 14,0 bis 20,0 MPa aufweist, wenn der komplexe Elastizitätsmodul unter Verwendung eines Viskoelastizitätsspektrometers gemäß JIS K6394 "Gummi, vulkanisiert oder thermoplastisch - Bestimmung von dynamischen Eigenschaften - Allgemeine Anweisungen" unter den Bedingungen einer Anfangsdehnung von 10 %, einer Amplitude von ±1 %, einer Frequenz von 10 Hz, eines Verformungsmodus von Zug, einer Messtemperatur von 70 °C und eines Viskoelastizitätsspektrometers von Iwamoto Seisakusho gemessen wird.

2. Luftreifen (1) nach Anspruch 1, wobei

   der Gürtelkord (9) sowohl in einer Hauptachsenrichtung (F1) als auch in einer Nebenachsenrichtung (F2) gewellt ist, und
   jeder Wellenabstand (P) 3,0 bis 10,0 mm beträgt, und eine Wellenhöhe (H) 0,05 bis 0,15 mm beträgt.

3. Luftreifen (1) nach Anspruch 1 oder 2, wobei der Deckgummi (10) einen Verlusttangens (tanδ) von 0,04 bis 0,16 aufweist, wenn der Verlusttangens unter Verwendung eines Viskoelastizitätsspektrometers gemäß JIS K6394 "Gummi, vulkanisiert oder thermoplastisch - Bestimmung von dynamischen Eigenschaften - Allgemeine Anweisungen" unter den Bedingungen einer Anfangsdehnung von 10 %, einer Amplitude von ±1 %, einer Frequenz von 10 Hz, eines Verformungsmodus von Zug, einer Messtemperatur von 70 °C und eines Viskoelastizitätsspektrometers von Iwamoto Seisakusho gemessen wird.

4. Luftreifen (1) nach Anspruch 1 oder 2, wobei der Deckgummi (10) einen Verlusttangens (tanδ) von 0,04 bis 0,11 aufweist, wenn der Verlusttangens unter Verwendung eines Viskoelastizitätsspektrometers gemäß JIS K6394 "Gummi, vulkanisiert oder thermoplastisch - Bestimmung von dynamischen Eigenschaften - Allgemeine Anweisungen" unter den Bedingungen einer Anfangsdehnung von 10 %, einer Amplitude von ±1 %, einer Frequenz von 10 Hz, eines Verformungsmodus von Zug, einer Messtemperatur von 70 °C und eines Viskoelastizitätsspektrometers von Iwamoto Seisakusho gemessen wird.

5. Luftreifen (1) nach Anspruch 1 oder 2, wobei der Deckgummi (10) einen Verlusttangens (tanδ) von 0,04 bis 0,08 aufweist, wenn der Verlusttangens unter Verwendung eines Viskoelastizitätsspektrometers gemäß JIS K6394 "Gummi, vulkanisiert oder thermoplastisch - Bestimmung von dynamischen Eigenschaften - Allgemeine Anweisungen" unter den Bedingungen einer Anfangsdehnung von 10 %, einer Amplitude von ±1 %, einer Frequenz von 10 Hz, eines Verformungsmodus von Zug, einer Messtemperatur von 70 °C und eines Viskoelastizitätsspektrometers von Iwamoto Seisakusho gemessen wird.

6. Luftreifen (1) nach einem der Ansprüche 1 bis 5, wobei ein Wert, der durch Dividieren des Verlusttangens (tanδ) des Deckgummis (10) durch den komplexen Elastizitätsmodul (E*) (MPa) des Deckgummis (10) erhalten wird, 0,002 bis 0,010 (MPa$^{-1}$) beträgt, wenn der Verlusttangens unter Verwendung eines Viskoelastizitätsspektrometers gemäß mit JIS K6394 "Gummi, vulkanisiert oder thermoplastisch - Bestimmung von dynamischen Eigenschaften - Allgemeine Anweisungen" unter den Bedingungen einer Anfangsdehnung von 10 %, einer Amplitude von ±1 %, einer Frequenz von 10 Hz, eines Verformungsmodus von Zug, einer Messtemperatur von 70 °C und eines Viskoelastizitätsspektrometers von Iwamoto Seisakusho gemessen wird.

7. Luftreifen (1) nach einem der Ansprüche 1 bis 6, wobei

   die Gürtellage (8) eine erste Gürtellage (8A) und eine zweite Gürtellage (8B) umfasst, die in einer Reifenradialrichtung benachbart zu der ersten Gürtellage (8A) ist, und
   ein Kord-zu-Kord-Abstand (G1) in der Reifenradialrichtung zwischen dem Gürtelkord (9) der ersten Gürtellage (8A) und dem Gürtelkord (9) der zweiten Gürtellage (8B) 0,10 bis 0,45 mm beträgt.

8. Luftreifen (1) nach einem der Ansprüche 1 bis 7, wobei der Gürtelkord (9) ein Stahlkord ist.

9. Luftreifen (1) nach einem der Ansprüche 1 bis 8, wobei der Gürtelkord (9) in einem Winkel von 15 bis 45 Grad gegenüber der Reifenumfangsrichtung geneigt ist.

10. Luftreifen (1) nach einem der Ansprüche 1 bis 9, wobei die Anzahl der Gürtelkorde (9) in der Gürtellage 8 in einer Breitenrichtung 32 bis 40 pro 50 mm beträgt.

**11.** Luftreifen (1) nach einem der Ansprüche 1 bis 10, wobei die Hauptachse (A) des Gürtelkords (9) in einer Breitenrichtung der Gürtellage (8) verläuft.

**12.** Luftreifen (1) nach einem der Ansprüche 1 bis 11, wobei

die Gürtellage (8) eine erste Gürtellage (8A) und eine zweite Gürtellage (8B) umfasst, die in der Reifenradialrichtung benachbart zu der ersten Gürtellage (8A) ist,
eine Gürtelverstärkungsschicht (15), die einen Verstärkungskord (16) enthält, in der Reifenradialrichtung außen von der Gürtellage (8) angeordnet ist, und
die folgenden Beziehungen erfüllt sind,

$$0{,}175 \leq (G1+G2)/2 \leq 0{,}425 \qquad (1)$$

$$0{,}27 \leq \{(G1+G2)/2\}/\{(G1+G2)/2+B\} \leq 0{,}68 \qquad (2)$$

wobei G1 (mm) einen durchschnittlichen Kord-zu-Kord-Abstand zwischen der ersten Gürtellage (8A) und der zweiten Gürtellage (8B) darstellt, G2 (mm) einen durchschnittlichen Kord-zu-Kord-Abstand zwischen der zweiten Gürtellage (8B) und der Gürtelverstärkungsschicht (15) darstellt, und B (mm) eine Länge der Nebenachse (B) des Gürtelkords (9) der zweiten Gürtellage (8B) darstellt.

**13.** Luftreifen (1) nach Anspruch 12, wobei die Breite (W1) der ersten Gürtellage (8A) in einer Reifenaxialrichtung 70 bis 100% einer Lauffächenbreite (TW) beträgt.

**14.** Luftreifen (1) nach Anspruch 12 oder 13, wobei eine Breite (W2) der zweiten Gürtellage (8B) in der Reifenaxialrichtung 65 bis 90 % der Laufflächenbreite (TW) beträgt.

## Revendications

**1.** Bandage pneumatique (1) incluant une portion formant bande de roulement (2), dans lequel

une couche de ceinture (7) incluant au moins une nappe de ceinture (8) est noyée dans la portion formant bande de roulement (2),
la nappe de ceinture (8) inclut un câblé de ceinture aplati (9) formé d'un câblé unique, et un caoutchouc d'enrobage (10) recouvrant le câblé de ceinture (9), et
un rapport axe majeur (A) / axe mineur (B) est de 1,05 sur 1,50, et une longueur de l'axe majeur (A) est de 0,30 à 0,50 mm dans le câblé de ceinture (9),
**caractérisé en ce que**
l'axe mineur (B) du câblé de ceinture (9) s'étend dans la direction de l'épaisseur de la nappe de ceinture (8), et le caoutchouc d'enrobage (10) a un module d'élasticité complexe (E*) de 14,0 à 20,0 MPa, quand le module d'élasticité complexe est mesuré en utilisant un spectromètre de viscoélasticité en conformité avec la norme industrielle japonaise JIS K6394 « Rubber, vulcanite or thermoplastic - Déterminations of dynamic properties - General guidance » (caoutchouc, vulcanisé ou thermoplastique - détermination de propriétés dynamiques - directives générales) sous les conditions d'une contrainte initiale de 10 %, d'une amplitude de ± 1 %, d'une fréquence de 10 Hz, d'un mode de déformation en traction, d'une température de mesurage de 70 °C, et d'un spectromètre de viscoélasticité Iwamoto Seisakusho.

**2.** Bandage pneumatique (1) selon la revendication 1, dans lequel

le câblé de ceinture (9) est ondulé dans chacune d'une direction d'axe majeur (F1) et d'une direction d'axe mineur (F2), et
chaque pas d'ondulation (P) est de 3,0 à 10,0 mm, et une hauteur d'ondulation (H) est de 0,05 à 0,15 mm.

**3.** Bandage pneumatique (1) selon la revendication 1 ou 2, dans lequel le caoutchouc d'enrobage (10) a une tangente de perte (tanδ) de 0,04 à 0,16, quand la tangente de perte est mesurée à l'aide d'un spectromètre de viscoélasticité en conformité avec la norme industrielle japonaise JIS K6394 « Rubber, vulcanized or thermoplastic - Determination of dynamic properties

- General guidance » (caoutchouc, vulcanisé ou thermoplastique - détermination de propriétés dynamiques - directives générales) sous les conditions d'une contrainte initiale de 10 %, d'une amplitude de ± 1 %, d'une fréquence de 10 Hz, d'un mode de déformation en traction, d'une température de mesurage de 70 °C, et d'un spectromètre de viscoélasticité Iwamoto Seisakusho.

4. Bandage pneumatique (1) selon la revendication 1 ou 2, dans lequel le caoutchouc d'enrobage (10) a une tangente de perte (tanδ) de 0,04 à 0,11, quand la tangente de perte est mesurée à l'aide d'un spectromètre de viscoélasticité en conformité avec la norme industrielle japonaise JIS K6394 « Rubber, vulcanized or thermoplastic - Determination of dynamic properties

- General guidance » (caoutchouc, vulcanisé ou thermoplastique - détermination de propriétés dynamiques - directives générales) sous les conditions d'une contrainte initiale de 10 %, d'une amplitude de ± 1 %, d'une fréquence de 10 Hz, d'un mode de déformation en traction, d'une température de mesurage de 70 °C, et d'un spectromètre de viscoélasticité Iwamoto Seisakusho.

5. Bandage pneumatique (1) selon la revendication 1 ou 2, dans lequel le caoutchouc d'enrobage (10) a une tangente de perte (tanδ) de 0,04 à 0,08, quand la tangente de perte est mesurée à l'aide d'un spectromètre de viscoélasticité en conformité avec la norme industrielle japonaise JIS K6394 « Rubber, vulcanized or thermoplastic - Determination of dynamic properties

- General guidance » (caoutchouc, vulcanisé ou thermoplastique - détermination de propriétés dynamiques - directives générales) sous les conditions d'une contrainte initiale de 10 %, d'une amplitude de ± 1 %, d'une fréquence de 10 Hz, d'un mode de déformation en traction, d'une température de mesurage de 70 °C, et d'un spectromètre de viscoélasticité Iwamoto Seisakusho.

6. Bandage pneumatique (1) selon l'une quelconque des revendications 1 à 5, dans lequel une valeur obtenue en divisant la tangente de perte (tanδ) du caoutchouc d'enrobage (10) par le module d'élasticité complexe (E*) (MPa) du caoutchouc d'enrobage (10) est de 0,002 à 0,010 (MPa$^{-1}$), quand la tangente de perte est mesurée à l'aide d'un spectromètre de viscoélasticité en conformité avec la norme industrielle japonaise JIS K6394 « Rubber, vulcanized or thermoplastic - Determination of dynamic properties - General guidance » (caoutchouc, vulcanisé ou thermoplastique - détermination de propriétés dynamiques - directives générales) sous les conditions d'une contrainte initiale de 10 %, d'une amplitude de ± 1 %, d'une fréquence de 10 Hz, d'un mode de déformation en traction, d'une température de mesurage de 70 °C, et d'un spectromètre de viscoélasticité Iwamoto Seisakusho.

7. Bandage pneumatique (1) selon l'une quelconque des revendications 1 à 6, dans lequel

la nappe de ceinture (8) inclut une première nappe de ceinture (8A) et une seconde nappe de ceinture (8B) adjacente à la première nappe de ceinture (8A) dans une direction radiale du pneumatique, et
une distance câblé à câblé (G1) dans la direction radiale du pneumatique entre le câblé de ceinture (9) de la première nappe de ceinture (8A) et le câblé de ceinture (9) de la seconde nappe de ceinture (8B) est de 0,10 à 0,45 mm.

8. Bandage pneumatique (1) selon l'une quelconque des revendications 1 à 7, dans lequel le câblé de ceinture (9) est un câblé en acier.

9. Bandage pneumatique (1) selon l'une quelconque des revendications 1 à 8, dans lequel le câblé de ceinture (9) est incliné sous un angle de 15 à 45 degrés par rapport à une direction circonférentielle du pneumatique.

10. Bandage pneumatique (1) selon l'une quelconque des revendications 1 à 9, dans lequel le nombre de câblés de ceinture (9) dans la nappe de ceinture (8) est de 32 à 40 par 50 mm dans une direction de la largeur.

11. Bandage pneumatique (1) selon l'une quelconque des revendications 1 à 10, dans lequel l'axe majeur (A) du câblé de ceinture (9) s'étendant dans une direction de la largeur de la nappe de ceinture (8).

**12.** Bandage pneumatique (1) selon l'une quelconque des revendications 1 à 11, dans lequel

la nappe de ceinture (8) inclut une première nappe de ceinture (8A) et une seconde nappe de ceinture (8B) adjacente à la première nappe de ceinture (8A) dans la direction radiale du pneumatique, une couche de renforcement de ceinture (15) incluant un câblé de renforcement (16) est située à l'extérieur de la nappe de ceinture (8) dans la direction radiale du pneumatique, et les relations suivantes sont satisfaites :

$$0{,}175 \leq (G1+G2)/2 \leq 0{,}425 \quad (1)$$

$$0{,}27 \leq \{(G1+G2)/2\}/\{(G1+G2)/2+B\} \leq 0{,}68 \quad (2),$$

où G1 (mm) représente une distance câblé à câblé moyenne entre la première nappe de ceinture (8A) et la seconde nappe de ceinture (8B), G2 (mm) représente une distance câblé à câblé moyenne entre la seconde nappe de ceinture (8B) et la couche de renforcement de ceinture (15), et B (mm) représente une longueur de l'axe mineur (B) du câblé de ceinture (9) de la seconde nappe de ceinture (8B).

**13.** Bandage pneumatique (1) selon la revendication 12, dans lequel une largeur (W1) de la première nappe de ceinture (8A) dans une direction axiale du pneumatique est de 70 à 100 % d'une largeur de bande de roulement (TW).

**14.** Bandage pneumatique (1) selon la revendication 12 ou 13, dans lequel une largeur (W2) de la seconde nappe de ceinture (8B) dans la direction axiale du pneumatique est de 65 à 90 % de la largeur de bande de roulement (TW).

Fig. 1

Fig. 2

Fig. 3

(a)

(b)

# Fig. 4

**(a)**

**(b)**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001080313 A
- EP 3995322 A1
- JP 2004216977 A
- EP 0543640 A1